# EUROPEAN PATENT APPLICATION

(11) **EP 4 657 540 A1**
(43) Date of publication of application: **03.12.2025**
(21) Application number: 25756432.8
(22) Date of filing: 28.05.2025
(51) Int. Cl.: H01M 4/13

(54) **DRY-METHOD ELECTRODE FILM AND PREPARATION METHOD THEREFOR, ELECTRODE AND BATTERY**

(30) Priority: 24.12.2024 CN 202411922353
(71) Applicant: Eve Energy Co., Ltd, Huizhou, Guangdong 516006 (CN)
(72) Inventor: QIU, Lida, Huizhou, Guangdong 516006 (CN); DENG, Huihui, Huizhou, Guangdong 516006 (CN); LIN, Luosheng, Huizhou, Guangdong 516006 (CN); FANG, Yinyin, Huizhou, Guangdong 516006 (CN); CAO, Lang, Huizhou, Guangdong 516006 (CN); ZHU, Yuan, Huizhou, Guangdong 516006 (CN)
(74) Representative: Tiburzi, Andrea
(86) International application number: PCT/CN2025/097626
(87) International publication number: WO 2025/195536

(57) **Abstract**

Disclosed are a dry electrode film, a preparation method therefor, and an electrode and a battery, which belong to the technical field of batteries. The method in the present application includes: mixing polytetrafluoroethylene, an active material, and a conductive agent, and pulverizing to obtain a pulverized mixed material; subjecting the pulverized mixed material to a primary jet milling shear to obtain a milled-sheared mixed material; wherein a condition of the primary shear includes: a gas stream temperature of -10°C-10°C, a gas stream pressure of 0.7-0.9 MPa, and a rotational speed of 8000-12000 rpm; subjecting the milled-sheared mixed material to a secondary jet milling shear and fibrillation to obtain a fibrillized material; and subjecting the fibrillized material to a secondary fibrillation treatment to obtain the dry electrode film. The method in the present application can significantly improve the tensile strength of the electrode film, increase the liquid absorption rate of the electrode, and reduce the electrical resistivity of the electrode.

## Description

This application claims priority to Chinese Patent Application No. 202411922353.7 filed with CNIPA on December 24, 2024, the disclosure of which is incorporated herein by reference in its entirety.

### TECHNICAL FIELD

The present application relates to the technical field of batteries, and specifically relates to a dry electrode film, a preparation method therefor, and an electrode and a battery.

### BACKGROUND

The preparation of conventional lithium battery electrodes usually adopts a method of coating: firstly, a binder, a solvent and a conductive agent are prepared into a conductive slurry, then an electrode active material is added in batches to prepare a uniform slurry, and finally the slurry is evenly coated on a current collector by a coating equipment, and dried, rolled and slit to form the electrode sheet.

### TECHNICAL PROBLEM

The above method has high requirements on dispersion of conductive agent, viscosity control of slurry, and coating equipment, also has low active material content of electrode sheet, strict control of production process, inability to prepare thick electrode sheet, and high energy consumption and high cost in solvent drying and solvent recovery process, which is environmentally unfriendly.

To address these limitations, a dry electrode process has been developed. The primary steps of the process involve: a conductive agent, a binder and an electrode active material are mixed evenly, and then the mixed material is subjected to high-speed shear forces to fibrillate the binder PTFE, forming a fibrous network that entraps the active material and conductive agent., and finally the mixed material is subjected to rolling and further fibrillation to prepare a self-supporting electrode film coating on a current collector to obtain a double-sided electrode. The fibrillation step is the key step of the dry electrode process, which requires a great shear force to evenly disperse and fibrillation PTFE. The mainstream methods include jet shear, high-speed stirring shear, ball milling shear, etc. However, the conventional fibrillation process needs high binder content (for example, 8wt% or more), and is has high demands in the fibrillation degree of binder, the shear force of the equipment, and the uniformity of the material mixing, and the production time is long, which is difficult to achieve large-scale production. This conflict arises fundamentally from the specific properties of the binder required for this process - polytetrafluoroethylene (PTFE). For the electrode film to form, PTFE must be uniformly dispersed amongst the electrode materials and then stretched under shear to form a nanoscale fibrous network. Higher molecular weight PTFE facilitates the fibrillation process. However, commercially available high-molecular-weight PTFE is typically supplied as particles with a secondary particle size of 500~700 µm to prevent agglomeration during transport. Given that the particle size of common positive electrode active materials is generally below 30 µm and conductive agents are typically nanoscale, achieving uniform mixing is difficult. This easily leads to segregation during mixing, resulting in inconsistent fibrillation effects.

### TECHNICAL SOLUTION

The present application provides a dry electrode film, a preparation method therefor, and an electrode and a battery, aiming to solve the deficiencies in dry electrode processes such as uneven mixing of polytetrafluoroethylene binder, low fibrillation degree, and consequently low strength of the electrode film.

According to an aspect of the present application, a preparation method for a dry electrode film is provided, which includes the following steps:
step S1: mixing a polytetrafluoroethylene material, an electrode active material, and a conductive agent, and pulverizing to obtain a pulverized mixed material;
step S2: subjecting the pulverized mixed material to a primary jet milling shear to obtain a milled-sheared mixed material; wherein conditions of the primary jet milling shear include: a gas stream temperature of -10°C-10°C, a compressed gas stream pressure of 0.7 MPa to 0.9 MPa, and a shear rotational speed of 8000 rpm to12000 rpm;
step S3: subjecting the milled-sheared mixed material to a secondary jet milling shear and fibrillation to obtain a fibrillized material; and
step S4: subjecting the fibrillized material to a secondary fibrillation treatment to obtain the dry electrode film.

Optionally, the gas stream temperature for the primary jet milling shear is -5°C-5°C; optionally, 0°C to 5°C.

Optionally, conditions for the secondary jet milling shear include: a gas stream temperature of 50°C-100°C, a compressed gas stream pressure of 0.7 MPa to 0.9 MPa, and a shear rotational speed of 8000 rpm to 12000 rpm.

Optionally, the gas stream temperature for the secondary jet milling shear is 60°C to -100°C; optionally, 70°C to 100°C; and further optionally, 80°C to 100°C.

Optionally, the shear rotational speed for the primary jet milling shear is 10000 rpm to 11000 rpm.

Optionally, the shear rotational speed for the secondary jet milling shear is 10000 rpm to 11000 rpm.

Optionally, the polytetrafluoroethylene material is polytetrafluoroethylene dispersion resin, which has an average particle size of 400 µm to 600 µm, a molecular weight of 500,000 to 8,000,000, and a compression ratio of 100 to 3000.

Optionally, the polytetrafluoroethylene dispersion resin is heat-preserved at a temperature of -8°C to 12°C for 8 h to 12 h prior to mixing.

Optionally, the specific process of step S1 includes: mixing the electrode active material and the conductive agent and pulverizing to obtain a powder material A; and mixing the heat-preserved polytetrafluoroethylene dispersion resin and the powder material A and pulverizing to obtain the pulverized mixed material.

Optionally, the electrode active material and the conductive agent are mixed by a ball mill or a high-speed mixer, and a rotational speed of the high-speed mixer is 400 rpm to 600 rpm.

Optionally, a ball-to-material ratio of the ball mill is 1:(1-2).

Optionally, the polytetrafluoroethylene dispersion resin and the powder material A are mixed by a dual-motion mixer or a three-dimensional motion mixer.

Optionally, the polytetrafluoroethylene dispersion resin and the powder material A are mixed in the dual-motion mixer for a period of 20 min to 40 min.

Optionally, the pulverized mixed material has an average particle size of 8 µm to 12 µm.

Optionally, the milled-sheared mixed material has an average particle size of 3µm to 6 µm.

Optionally, the primary jet milling shear and/or the secondary jet milling shear are performed using a jet mill.

Optionally, the jet mill is a fluidized bed jet mill.

Optionally, the secondary fibrillation treatment is performed using a differential speed roller press to carry out differential open mill fibrillation.

Optionally, the differential speed roller press has a rolling temperature of 60°C to 120°C, and a rolling speed ratio of 1:(1-1.5).

Optionally, a weight ratio of the electrode active material to the conductive agent is (90-95):(0-5).

Optionally, a weight ratio of the powder material A to the heat-preserved polytetrafluoroethylene dispersion resin is (95-99):(1-3).

Optionally, the electrode active material includes a positive electrode active material and a negative electrode active material; wherein, the positive electrode active material is selected from at least one of lithium iron phosphate, lithium manganese iron phosphate, lithium nickel cobalt manganese oxide, lithium cobalt oxide, lithium manganese oxide, lithium nickel cobalt aluminate, and manganese dioxide; and the negative electrode active material is selected from at least one of artificial graphite, natural graphite, lithium titanate, a silicon-oxygen negative electrode material and silicon carbon.

Optionally, the conductive agent is selected from at least one of conductive carbon black, graphite, graphene, carbon nanotubes, carbon fiber, acetylene black, and Ketjen black.

According to a second aspect of the present application, a dry electrode film is provided, which is prepared by the above preparation method for a dry electrode film.

Optionally, the dry electrode film has a thickness of 100 µm to 150 µm, a tensile strength of 0.2 MPa to 0.4 MPa, and a compacted density of 2.50 g/cm³ to 3.30 g/cm³.

According to a third aspect of the present application, a preparation method for a dry electrode is provided, and the preparation method for a dry electrode includes the following steps: rolling a dry electrode film onto at least one side of a current collector; wherein, the dry electrode film is the above dry electrode film.

Optionally, the rolling is performed at a temperature of 0°C to 100°C.

Optionally, the current collector is selected from at least one of a copper foil, a carbon-coated copper foil, an aluminum foil, a nickel foil, a stainless steel mesh, an aluminum mesh, and a nickel mesh.

According to a fourth aspect of the present application, a battery is provided, which includes an electrode, a separator, and an electrolyte; the electrode is the electrode prepared by the above preparation method for a dry electrode.

### BENEFICIAL EFFECTS

Applying the technical solution of the present application, a preparation method for a dry electrode film is provided. Based on the phase transition temperature of the binder PTFE, the method employs shearing at different temperatures. It first subjects the mixture to low-temperature high-speed shearing, enabling the reduction of the binder particle size to the nanoscale and achieving more uniform distribution. Subsequently, it undergoes high-temperature high-speed shearing, resulting in a higher degree of binder fibrillation. The prepared electrode film exhibits higher tensile strength, requires less binder usage, and also reduces anisotropy after film formation. This method also overcomes the thickness limitation of electrodes, enabling the production of electrodes with thicknesses ranging from 30 µm to 3 mm. It is suitable for different battery systems. Compared to the traditional coating electrode process, this method eliminates the drying step, reduces the powder shedding rate of the electrode sheet, and enables the production of thick electrodes. This satisfies the manufacturing requirements for batteries with higher energy density.

Other aspects will be appreciated upon reading and understanding the attached drawings and detailed description.

### BRIEF DESCRIPTION OF DRAWINGS

The drawings of the description, which form part of the present application, are used to provide further understanding of the present application, and the schematic embodiments of the present application and the description are used to interpret the present application and do not constitute an undue limitation of the present application. In the attached drawings:
FIG. 1 shows a flow chart for the preparation process of a dry electrode film and an electrode in an embodiment of the present application;
FIG. 2 shows an SEM image of the surface of the positive electrode active material coating with PTFE before fibrillation in Example 1 of the present application;
FIG. 3 shows an SEM image of the fibrillation effect of PTFE in Example 1 of the present application;
FIG. 4 shows an SEM image of the surface of the electrode film in Example 1 of the present application;
FIG. 5 shows a comparison diagram of the longitudinal tensile strength of the electrode films in Example 1, Comparative Example 1, Comparative Example 2, and Comparative Example 3 of the present application;
FIG. 6 shows a comparison diagram of the transverse tensile strength of the electrode films in Example 1, Comparative Example 1, Comparative Example 2, and Comparative Example 3 of the present application;
FIG. 7 shows a comparison diagram of the electrical resistivity of the electrodes in Example 1, Comparative Example 1, Comparative Example 2, and Comparative Example 3 of the present application; and
FIG. 8 shows a comparison diagram of the liquid absorption rate of the electrodes in Example 1, Comparative Example 1, Comparative Example 2, and Comparative Example 3 of the present application.

### DETAILED DESCRIPTION

It should be noted that the embodiments in the present application and the features in the embodiments may be combined with each other if no conflict. The present application is described in detail below with reference to the drawings and in conjunction with embodiments.

In related technologies, jet shear, high-speed stirring shear, ball milling shear and other methods are usually used for the fibrillation of PTFE binder, these methods require a high amount of binder such as 8wt% or more, and the secondary particle size of PTFE used is 500-700 µm; the mixing of the PTFE with active materials and conductive agents is uneven, which is easy to cause segregation, and may produce uneven fibrillation effect, thereby reducing the tensile strength and other properties of the dry electrode film. Therefore, based on the phase-transition temperature of the binder PTFE, the present application adopts different temperature shear methods to improve the mixing uniformity and fibrillation degree of PTFE.

According to an aspect of the present application, a preparation method for a dry electrode film is provided, which includes the following steps:
step S1: mixing a polytetrafluoroethylene material, an electrode active material, and a conductive agent, and pulverizing to obtain a pulverized mixed material;
step S2: subjecting the pulverized mixed material to a primary jet milling shear to obtain a milled-sheared mixed material; wherein conditions of the primary jet milling shear include: a gas stream temperature of -10°C-10°C, a compressed gas stream pressure of 0.7 MPa to 0.9 MPa, and a shear rotational speed of 8000 rpm to12000 rpm;
step S3: subjecting the milled-sheared mixed material to a secondary jet milling shear to obtain a fibrillized material; and
step S4: subjecting the fibrillized material to a secondary fibrillation treatment to obtain the dry electrode film.

In the present application, the gas stream temperature for the above primary jet milling shear is selected from any value of -10°C, -9°C, -8°C, -7°C, -6°C, -5°C, -4°C, -3°C, -1°C, 0°C, 1°C, 2°C, 3°C, 4°C, 5°C, 6°C, 7°C, 8°C, 9°C, 10°C or a range between the above values; the gas stream temperature for the secondary jet milling shear is selected from any value of 50°C, 55°C, 60°C, 65°C, 70°C, 75°C, 80°C, 85°C, 90°C, 95°C, 100°C or a range between the above values; for example, the gas stream temperature for the primary jet milling shear is -5-10°C, optionally, -5-5°C, further optionally, 0-5°C, and for another example, 0°C; the gas stream temperature for the secondary jet milling shear is 50-100°C, optionally, 60-100°C, further optionally, 70-100°C, further optionally, 80-100°C, and for another example, 80°C.

In the present application, a shear rotational speed of the above primary jet milling shear is any value of 8000 rpm, 8500 rpm, 9000 rpm, 9500 rpm, 10000 rpm, 10500 rpm, 11000 rpm, 11500 rpm, 12000 rpm, or a range between the above values, and for example, 10000 rpm; a shear rotational speed of the secondary jet milling shear is any value of 8000 rpm, 8500 rpm, 9000 rpm, 9500 rpm, 10000 rpm, 10500 rpm, 11000 rpm, 11500 rpm, 12000 rpm or a range between the above values, and for example, 10000 rpm; the twice shear rotational speeds may be the same or different.

In the preparation method of a dry electrode film provided in the present application, based on the phase-transition temperature of the binder PTFE (the phase-transition temperature of PTFE is 19°C), the method of shear at different temperatures is adopted: firstly, the PTFE-containing mixed material is subjected to low-temperature high-speed shear, so that the particle size of the PTFE binder is reduced from microscale to nanoscale, and the mixed material is more uniformly dispersed; because the temperature during the low-temperature high-speed shear process is lower than the phase-transition temperature, PTFE will not be fibrillized theoretically, but heat will be generated during the shear process, thereby, the temperature of the low-temperature high-speed shear is appropriately be controlled at -10°C to 10°C to achieve the preset fibrillation effect; because the shear rotational speed is close to the fibrillation shear rotational speed, and high-speed milling shear is adopted in both processes, the commonly used PTFE with large particle size at the microscale can be ground and sheared to the nanoscale, and coated on the active material after being decreased to a nanometer size. The method can greatly improve the uniformity of the mixing of various raw material, and will be more conducive to the subsequent fibrillation of the PTFE mixed material; the PTFE mixture is subjected to high-temperature high-speed shear after being prepared into nanoscale, so that the fibrillation degree of PTFE is higher, the tensile strength of the prepared electrode film is higher, the use of binder is less, and the anisotropy after film formation is reduced.

The present application adopts continuous dry rolling to prepare electrodes, and the production process is performed without solvents and drying process, which reduces the production energy consumption. In the present application, the electrode binder exists in a fibrous state, and the contact between the positive electrode active material is closer with the conductive agent particles, which improves the compaction density of the electrode, reduces the resistance of the electrode sheet, and reduces the powder loss rate of the electrode sheet; in the present application, the particle size and fibrillation degree of PTFE binder are controlled by temperature, which improves the uniformity of material mixing, reduces the difficulty of electrode film molding, and improves the tensile strength of the film.

In some embodiments, the polytetrafluoroethylene material is polytetrafluoroethylene dispersion resin, which has an average particle size of 400-600 µm, a molecular mass of 500,000 to 8,000,000, and a compression ratio of 100-3000.

The improved method of the present application is mainly aimed at the commonly used high molecular mass PTFE on the market, which is made into large particles with a secondary particle size of 500-700 µm to avoid agglomeration during transportation; in related technologies, the large particle size PTFE is often directly mixed with an active material and a conductive agent, resulting in uneven mixing of micro-sized PTFE and nano-sized other materials, which affects the fibrillation degree of PTFE and the strength of the electrode film. By adopting the improved method of the present application, the microscale PTFE can be prepared into a nanoscale, further improving the dispersion uniformity.

In some embodiments, the polytetrafluoroethylene dispersion resin is heat-preserved at a temperature of -8°C to 12°C for 8 h to 12 h prior to mixing; for example, heat-preserved at -10°C for 10 h. In the present application, PTFE is heat-preserved at the above temperature before use, which can prevent the increase of the particle size of PTFE due to further agglomeration, and avoid causing difficulties to the subsequent powder mixing.

In some embodiments, the specific process of step S1 includes: mixing the electrode active material and the conductive agent and pulverizing to obtain a powder material A; and mixing the heat-preserved polytetrafluoroethylene dispersion resin and the powder material A and pulverizing to obtain the pulverized mixed material. In the present application, the mixing uniformity can be further improved by gradual mixing.

In some embodiments, the electrode active material and the conductive agent are mixed by a ball mill or a high-speed mixer, and a rotational speed of the high-speed mixer is 400-600 rpm; a ball-to-material ratio of the ball mill is 1:(1-2); the polytetrafluoroethylene dispersion resin and the powder material A are mixed by a dual-motion mixer or a three-dimensional motion mixer; and mixing in the dual-motion mixer is performed for a period of 20-40 min.

In the present application, different mixing equipment and process conditions are selected according to different mixing materials, which improves the dispersion and uniformity of various mixture in a targeted manner; during the mixing of PTFE and powder A in the dual-motion mixer or the three-dimensional motion mixer, the mixing time is controlled at, for example, 20-40 min as mentioned above, and for another example, 30 min, avoiding excessive shear that causes PTFE fibrillation before the subsequent high-temperature high-speed shear, which is not conducive to the subsequent PTFE fibrillation effect.

In some embodiments, an average particle size of the pulverized mixed material is 8-12 µm; an average particle size of the milled-sheared mixed material is 3-6 µm, for example, 3-4 µm. In the present application, the particle size of the mixed material is gradually reduced by the crushing and milling shear process, which is conducive to the subsequent jet milling shear process.

In some embodiments, the primary jet milling shear and/or the secondary jet milling shear are performed by using a jet mill; for example, by using a fluidized bed jet mill. In the present application, compared with a mixer or a ball mill, the twice milling shear both use the above equipment, and the heat generated by the airflow mill in the grinding process will be taken away by the low-temperature air flow in time, avoiding the deformation, fibrillation, and uneven distribution of PTFE caused by local heat accumulation in the equipment cavity; while in the fibrillation process, a high-temperature gas stream (specifically referring to the gas stream of above the PTFE phase-transition temperature, that is, 19°C or more) can be used to subject PTFE to phase-transition and promote the fibrillation of PTFE; when the temperature is lower than 19°C, the PTFE molecular chain is 13/6 helix, and PTFE undergoes phase transition at 19°C, the molecules are slightly unwound to form a 15/7 helix, which is more prone to fibrillation.

In some embodiments, the secondary fibrillation treatment uses a differential speed roller press to carry out differential open mill fibrillation; a rolling temperature of 60°C-120°Cand a rolling speed ratio of 1:(1-1.5) can be adopted. In the present application, by using the above rolling conditions, the PTFE mixed material can be fully and completely fibrillation to form an electrode film.

In some embodiments, a weight ratio of the electrode active material to the conductive agent is (90-95):(0-5), for example, 92:5; a weight ratio of the powder material A to the heat-preserved polytetrafluoroethylene dispersion resin is (95-99):(1-5), for example, 98:2. In the present application, the content of PTFE is controlled at 1-5, which has a better synergistic effect on fibrillation after mixing with other components, avoiding the phenomenon of cracks in the film in a case where the PTFE content is too large or too small.

In some embodiments, the electrode active material includes a positive electrode active material and a negative electrode active material; wherein, the positive electrode active material is selected from at least one of lithium iron phosphate, lithium manganese iron phosphate, lithium nickel cobalt manganese oxide, lithium cobalt oxide, lithium manganese oxide, lithium nickel cobalt aluminate, and manganese dioxide; the negative electrode active material is selected from at least one of artificial graphite, natural graphite, lithium titanate, a silicon-oxygen negative electrode material and silicon carbon. The preparation method for an electrode film in the present application is suitable for a positive electrode film and a negative electrode film, and other types of positive electrode materials, negative electrode materials, or conductive agents can also be selected according to actual needs.

In the present application, the conductive agent mainly uses carbon nanotubes (CNTs) and graphite; because carbon nanotubes and PTFE fibers have similar one-dimensional linear morphology, these two may have a synergistic effect, and can connect more active material particles, thereby constructing a more effective electronic dredging network, and graphite can help the powder film thinning process due to the good lubricity endowed by the sheet structure.

According to a second aspect of the present application, a dry electrode film is provided, which is prepared by the above preparation method for a dry electrode film.

In some embodiments, the dry electrode film has a thickness of 100-152 µm, for example, 115-152 µm; a tensile strength of 0.15-0.4 MPa, for example, 0.15-0.30 MPa, and for another example 0.15-0.25; and a compacted density of 2.50-3.30 g/cm³, for example, 2.50-3.0 g/cm³.

Due to PTFE having good dispersion, good uniformity, and a high degree of fibrillation, the electrode film prepared by the method in the present application has improved mechanical properties such as tensile strength, and compaction density, thereby improving the energy density of the battery; this method is also suitable for thick electrode films.

According to a third aspect of the present application, a preparation method for a dry electrode is provided, and the preparation method for a dry electrode includes the following steps: rolling-in a dry electrode film onto at least one side of a current collector; wherein, the dry electrode film is the above dry electrode film.

In some embodiments, the rolling is performed at a temperature of 0°C-100°C during coating on the current collector; the current collector is selected from at least one of a copper foil, a carbon-coated copper foil, an aluminum foil, a nickel foil, a stainless steel mesh, an aluminum mesh, and a nickel mesh.

The electrode film prepared by the method in the present application can be correspondingly laminated on one or both sides of the positive electrode or negative electrode current collector, and other types of current collectors can be selected according to actual needs.

According to a fourth aspect of the present application, a battery is provided, which includes an electrode, a separator, and an electrolyte; the electrode is the electrode prepared by the above preparation method for a dry electrode.

The present application is described in further detail below in conjunction with specific embodiments, which cannot be construed as limiting the protective scope claimed in the present application.

Each raw material and equipment used in the embodiment of the present application are products of related technology and can be commercially purchased.

### Example 1

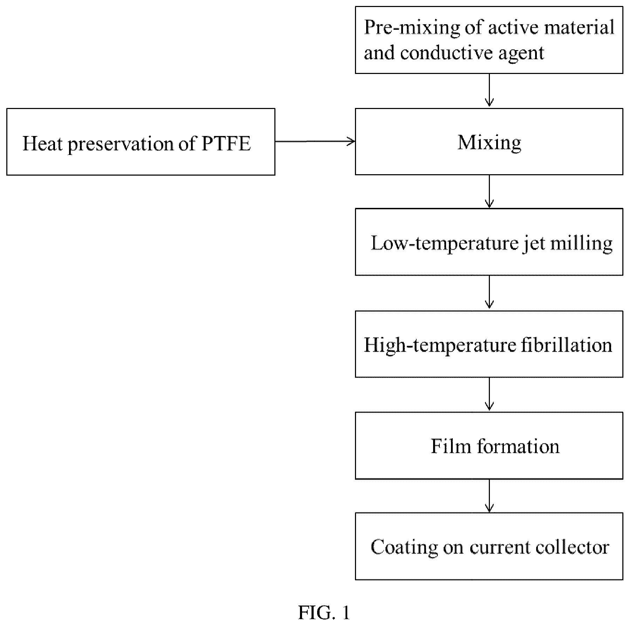

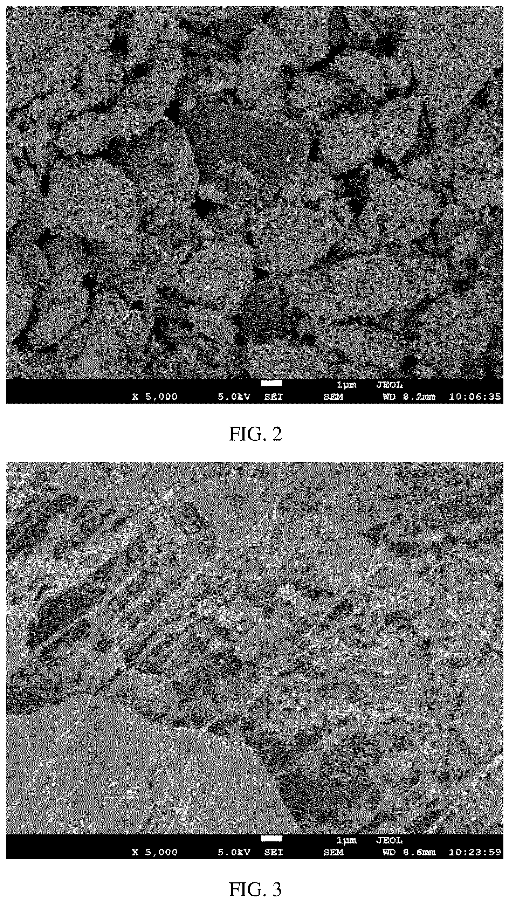

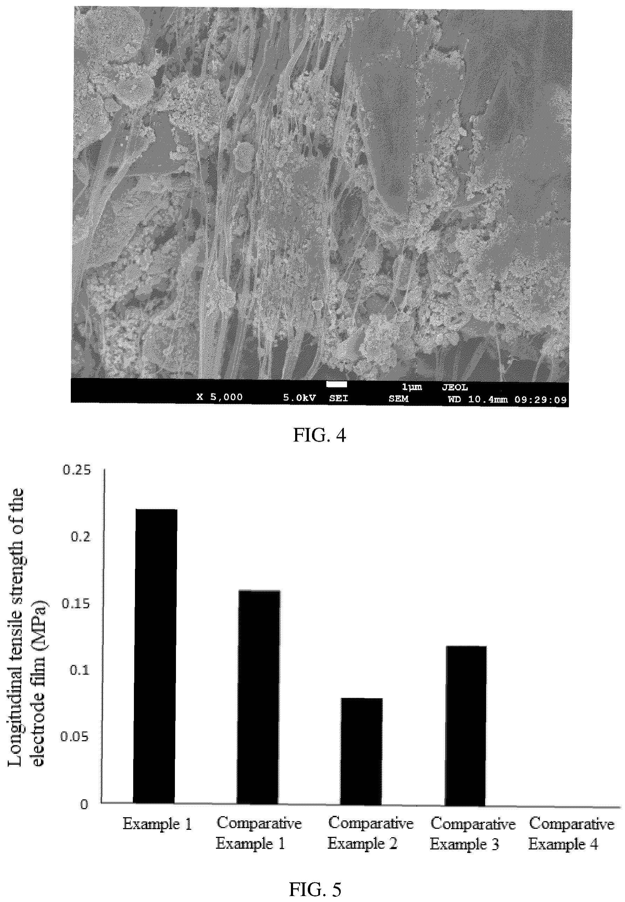

The preparation process of the battery electrode is shown in FIG. 1, which includes the following steps:
(1) PTFE heat preservation: PTFE having a secondary particle size of 570 µm, a molecular weight of 7,700,000, and a compression ratio of 100-300; and PTFE was placed at -10°C for heat preservation for 10 h;
(2) pre-mixing: lithium iron phosphate (LFP), graphite, and carbon nanotubes in a ratio of 92:2:3 were evenly mixed using a ball mill with a ball-to-material ratio of 1:1at 500 rpm to obtain a powder material A; the powder material A and the heat-preserved binder PTFE in a ratio of 98:2 were mixed in a dual-motion mixer for 30 min to obtain a powder material B, with an average particle size of 10.4 µm; and the morphology of the PTFE coated on the active material after mixing is shown in FIG. 2;
(3) fibrillation: the powder material B was subjected to low-temperature jet milling using a jet mill at a gas stream temperature of 0°C, a milling pressure of 0.70 MPa, and a grading wheel speed of 10000 rpm, to obtain a powder material C with an average particle size of 3.6 µm; the fibrillation effect of PTFE is shown in FIG. 3;
   the powder material C was then subjected to high-temperature jet milling using a jet mill at a gas stream temperature of 80°C, a milling pressure of 0.90 MPa, and a grading wheel speed of 10000 rpm, to obtain a powder material D;
(4) film formation: the powder material D was fibrillated and formed into a film using a multi-stage differential speed roller press at a rolling speed ratio of 1:1.5, and rolled for once at temperatures of 120°C/100°C/60°C separately, to obtain an electrode film with a film thickness of 120 µm, tensile strength of 0.25 MPa, and compacted density of 2.90 g/cm³; and the morphology of the electrode film is shown in FIG. 4; and
(5) coating on current collector: after the formation of the electrode film, an aluminum foil current collector was rolled on both sides simultaneously to form an electrode at a rolling temperature of 50°C, to obtain the positive electrode sheet.

### Example 2

Example 2 differs from Example 1 in that the fibrillation process in step (3) was different;
fibrillation: the powder material B was subjected to low-temperature jet milling using a jet mill at a gas stream temperature of -10°C, a milling pressure of 0.80 MPa, and a grading wheel speed of 10000 rpm, to obtain a powder material C with an average particle size of 4.1 µm;
the powder material C was then subjected to high-temperature jet milling using a jet mill at a gas stream temperature of 90°C, a milling pressure of 0.90 MPa, and a grading wheel speed of 10000 rpm, to obtain a powder material D.

### Example 3

Example 3 differs from Example 1 in that the fibrillation process in step (3) was different;
fibrillation: the powder material B was subjected to low-temperature jet milling using a jet mill (model) at a gas stream temperature of -5°C, a milling pressure of 0.90 MPa, and a grading wheel speed of 10000 rpm, to obtain a powder material C with an average particle size of 3.2 µm;
the powder material C was then subjected to high-temperature jet milling using a jet mill at a gas stream temperature of 100°C, a milling pressure of 0.90 MPa, and a grading wheel speed of 10000 rpm, to obtain a powder material D.

### Example 4

Example 4 differs from Example 1 in that the fibrillation process in step (3) was different;
fibrillation: the powder material B was subjected to low-temperature jet milling using a jet mill at a gas stream temperature of 5°C, a milling pressure of 0.90 MPa, and a grading wheel speed of 10000 rpm, to obtain a powder material C with an average particle size of 4.0 µm;
the powder material C was then subjected to high-temperature jet milling using a jet mill at a gas stream temperature of 70°C, a milling pressure of 0.90 MPa, and a grading wheel speed of 10000 rpm, to obtain a powder material D.

### Example 5

Example 5 differs from Example 1 in that the fibrillation process in step (3) was different;
fibrillation: the powder material B was subjected to low-temperature jet milling using a jet mill at a gas stream temperature of 10°C, a milling pressure of 0.90 MPa, and a grading wheel speed of 10000 rpm, to obtain a powder material C with an average particle size of 3.5 µm;
the powder material C was then subjected to high-temperature jet milling using a jet mill at a gas stream temperature of 60°C, a milling pressure of 0.90 MPa, and a grading wheel speed of 10000 rpm, to obtain a powder material D.

### Example 6

Example 6 differs from Example 1 in that the fibrillation process in step (3) was different;
fibrillation: the powder material B was subjected to low-temperature jet milling using a jet mill at a gas stream temperature of 3°C, a milling pressure of 0.90 MPa, and a grading wheel speed of 10000 rpm, to obtain a powder material C with an average particle size of 3.9 µm;
the powder material C was then subjected to high-temperature jet milling using a jet mill at a gas stream temperature of 50°C, a milling pressure of 0.90 MPa, and a grading wheel speed of 10000 rpm, to obtain a powder material D.

### Example 7

Example 7 differs from Example 1 in that the fibrillation process in step (3) was different;
fibrillation: the powder material B was subjected to low-temperature jet milling using a jet mill at a gas stream temperature of 0°C, a milling pressure of 0.70 MPa, and a grading wheel speed of 8000 rpm, to obtain a powder material C with an average particle size of 5.4 µm;
the powder material C was then subjected to high-temperature jet milling using a jet mill at a gas stream temperature of 80°C, a milling pressure of 0.90 MPa, and a grading wheel speed of 8000 rpm, to obtain a powder material D.

### Example 8

Example 8 differs from Example 1 in that the fibrillation process in step (3) was different;
fibrillation: the powder material B was subjected to low-temperature jet milling using a jet mill at a gas stream temperature of 0°C, a milling pressure of 0.70 MPa, and a grading wheel speed of 9000 rpm, to obtain a powder material C with an average particle size of 6.1 µm;
the powder material C was then subjected to high-temperature jet milling using a jet mill at a gas stream temperature of 80°C, a milling pressure of 0.90 MPa, and a grading wheel speed of 9000 rpm, to obtain a powder material D.

### Example 9

Example 9 differs from Example 1 in that the fibrillation process in step (3) was different;
fibrillation: the powder material B was subjected to low-temperature jet milling using a jet mill at a gas stream temperature of 0°C, a milling pressure of 0.70 MPa, and a grading wheel speed of 11000 rpm, to obtain a powder material C with an average particle size of 5.0 µm;
the powder material C was then subjected to high-temperature jet milling using a jet mill at a gas stream temperature of 80°C, a milling pressure of 0.90 MPa, and a grading wheel speed of 11000 rpm, to obtain a powder material D.

### Example 10

Example 10 differs from Example 1 in that the fibrillation process in step (3) was different;
fibrillation: the powder material B was subjected to low-temperature jet milling using a jet mill at a gas stream temperature of 0°C, a milling pressure of 0.70 MPa, and a grading wheel speed of 12000 rpm, to obtain a powder material C with an average particle size of 4.7 µm;
the powder material C was then subjected to high-temperature jet milling using a jet mill at a gas stream temperature of 80°C, a milling pressure of 0.90 MPa, and a grading wheel speed of 12000 rpm, to obtain a powder material D.

### Example 11

Example 11 differs from Example 1 in that the fibrillation process in step (3) was different;
fibrillation: the powder material B was subjected to low-temperature jet milling using a jet mill at a gas stream temperature of 0°C, a milling pressure of 0.70 MPa, and a grading wheel speed of 10000 rpm, to obtain a powder material C with an average particle size of 5.6 µm;
the powder material C was then subjected to high-temperature jet milling using a jet mill at a gas stream temperature of 90°C, a milling pressure of 0.90 MPa, and a grading wheel speed of 12000 rpm, to obtain a powder material D.

### Example 12

Example 12 differs from Example 1 in that the active material on step (2) was a negative electrode active material;
pre-mixing: artificial graphite and carbon nanotubes were evenly mixed in a ratio of 92:6 by a ball mill at 500 rpm with a ball-to-material ratio of 1:1, to obtain a powder material A; and the powder material A and the heat-preserved binder PTFE were put into a dual-motion mixer in a ratio of 98:2 and mixed for 30 min, to obtain a powder material B.

### Comparative Example 1

Comparative Example 1 differs from Example 1 in that PTFE was not subjected to low-temperature high-speed milling shear treatment, but was directly subjected to high-temperature jet milling fibrillation;
(3) fibrillation: the powder material B was subjected to high-temperature jet milling fibrillation using a jet mill at a gas stream temperature of 80°C, a milling pressure of 0.90 MPa, and a grading wheel speed of 10000 rpm, to obtain a powder material D.

### Comparative Example 2

Comparative Example 2 differs from Example 1 in that the powder material C was subjected to fibrillation at room temperature in step (3);
the powder material C was subjected to jet milling using a jet mill at a gas stream temperature of 20°C, a milling pressure of 0.90 MPa, and a grading wheel speed of 10000 rpm, to obtain a powder material D.

### Comparative Example 3

Comparative Example 3 differs from Example 1 in that the content of PTFE was 8wt% in step (1), and PTFE was not subjected to low-temperature high-speed milling shear treatment, but was subjected to fibrillation at room temperature in step (3);
lithium iron phosphate (LFP), graphite, and carbon nanotubes were evenly mixed in a ratio of 90:1:1 by a ball mill at 500 rpm with a ball-to-material ratio of 1:1, to obtain a powder material A; and the powder material A and the heat-preserved binder PTFE were put into a dual-motion mixer in a ratio of 90:8 and mixed for 30 min, to obtain a powder material B;
the powder material B was subjected to jet milling fibrillation by a low-temperature jet mill at a gas stream temperature of 20°C, a milling pressure of 0.90 MPa, and a grading wheel speed of 10000 rpm, to obtain a powder material D.

### Comparative Example 4

Comparative Example 4 differs from Example 1 in that PTFE was not subjected to low-temperature high-speed milling shear treatment, but was subjected to fibrillation at room temperature in step (3);
the powder material B was subjected to low-temperature jet milling using a jet mill at a gas stream temperature of 20°C, a milling pressure of 0.90 MPa, and a grading wheel speed of 10000 rpm, to obtain a powder material D.

### Comparative Example 5

Comparative Example 5 differs from Example 1 in that the powder material B was subjected to jet milling shear at a different temperature in step (3);
the powder material B was subjected to low-temperature jet milling using a jet mill at a gas stream temperature of 15°C, a milling pressure of 0.70 MPa, and a grading wheel speed of 10000 rpm, to obtain a powder material C.

### Comparative Example 6

Comparative Example 6 differs from Example 1 in that the powder material B was subjected to jet milling shear at a different temperature in step (3);
the powder material B was subjected to low-temperature jet milling using a jet mill at a gas stream temperature of 19°C, a milling pressure of 0.70 MPa, and a grading wheel speed of 10000 rpm, to obtain a powder material C.

The electrode films prepared by Examples 1-12 and Comparative Examples 1-6 were subjected to detections on thickness, tensile strength, and compacted density; the test method of tensile strength refers to "GB/T 1040.2-2022 Plastics-Determination of tensile properties-Part 2: Test conditions for moulding and extrusion plastics"; and the test results are shown in Table 1.

Testing method of electrochemical performance: the film resistivity of the obtained electrode sheet was tested by using the electrode sheet resistance tester BER2300 from Initial Energy Science & Technology.

Testing method of liquid absorption rate: an electrode film of 10 × 3 cm was taken, and weighed and recorded as pre-weight m1; after weighing, the electrode film was immersed in an electrolyte for 2 h, and then take out by using a tweezer, wipe dried the free electrolyte on the surface, and weighed and record as m2; the liquid absorption rate = (m2-m1) / m1.

The resistivity and liquid absorption rate of the prepared electrodes were detected through the above methods.

**Table 1**

| Electrode film | Tensile strength /MPa | Thickness /µm | Compacted density g/cm³ |
|---|---|---|---|
| Example 1 | 0.22 | 120 | 2.90 |
| Example 2 | 0.18 | 125 | 2.87 |
| Example 3 | 0.15 | 117 | 2.65 |
| Example 4 | 0.17 | 124 | 2.87 |
| Example 5 | 0.15 | 135 | 2.85 |
| Example 6 | 0.19 | 152 | 2.77 |
| Example 7 | 0.17 | 143 | 2.74 |
| Example 8 | 0.16 | 125 | 2.83 |
| Example 9 | 0.16 | 134 | 2.80 |
| Example 10 | 0.15 | 130 | 2.83 |
| Example 11 | 0.20 | 115 | 2.79 |
| Example 12 | 0.21 | 116 | 1.76 |
| Comparative Example 1 | 0.14 | 120 | 2.78 |
| Comparative Example 2 | 0.08 | 123 | 2.67 |
| Comparative Example 3 | 0.12 | 117 | 2.56 |
| Comparative Example 4 | / | / | / |
| Comparative Example 5 | 0.14 | 143 | 2.71 |
| Comparative Example 6 | 0.14 | 126 | 2.77 |

The test data in Table 1 shows that the electrode film prepared by the dry process of Examples 1-12 in the present application has a thickness of 115-152 µm, a tensile strength of 0.15-0.22 MPa, and a compacted density of 2.65-2.90 g/cm³ (Example 12 is a negative electrode with a compacted density of 1.76), and the tensile strength, resistivity, and liquid absorption rate are shown in FIG. 5, FIG. 6, FIG. 7, and FIG. 8.

In the preparation method of Comparative Example 1, PTFE was not subjected to low-temperature high-speed milling shear, but the microscale PTEF was mixed with a nanoscale active material and a conductive agent, and then directly subjected to high-temperature jet milling. Due to the poor dispersion and heterogeneity of the PTFE mixed material, the fibrillation effect is worse, the tensile strength of the prepared electrode film was 0.14 MPa and the compacted density was 2.78 g/cm³, the electrode film was prone to cracking or strip breakage, and there was obvious unevenly dispersed PTFE on the surface of the electrode film. Through the comparison, it can be seen that in the present application, PTFE is prepared into nanoscale particles under the conditions of low-temperature high-speed milling shear, and then subjected to high-temperature high-speed milling shear and fibrillation treatment, which can significantly promote the uniformly dispersion of PTFE and a better fibrillation effect, and the tensile strength of the prepared electrode film can be significantly improved.

In Comparative Example 2, the fibrillation of PTFE was carried out at room temperature; due to the inappropriate fibrillation temperature, the continuous electrode film could not be obtained, and the band was broken during the thinning process of the electrode film, indicating that during the fibrillation of PTFE, the fibrillation temperature of PTFE needs to reach a certain value, thus a good fibrillation effect can be obtained.

In Comparative Example 3, the PTFE content was excessive, and PTFE was not subjected to low-temperature high-speed shear, but was subjected to fibrillation at room temperature; and cracks occur during the thinning process of the electrode film, which greatly reduces the tensile strength of the electrode film.

In Comparative Example 4, PTFE was not subjected to low-temperature high-speed shear treatment, but was subjected to fibrillation at room temperature; and in the film-forming process, the powder was meshed and stuck, and there was no tensile strength.

In Comparative Example 5 and Comparative Example 6, a temperature similar to the PTFE phase-transformation temperature was adopted in low-temperature jet milling; at such temperature, part of the PTFE has fibrillation due to the heat production during the shear process in the process of preparing microscale PTFE to nanoscale particles, which will hinder and destroy the effect of PTFE nanoscale particles, resulting in poor dispersion and uniformity of the final PTFE, and deteriorating the fibrillation effect of PTFE, thereby reducing the tensile strength of the electrode film. From the comparison, it can be seen that before the fibrillation of PTFE, PTFE needs to be prepared into nanoscale, and the situation of premature fibrillation of PTFE due to high shear temperature in the process of preparing PTFE to nanoscale particles needs to be avoid; therefore, the shear temperature during the process of preparing PTFE to nanoscale particles should be strictly controlled.

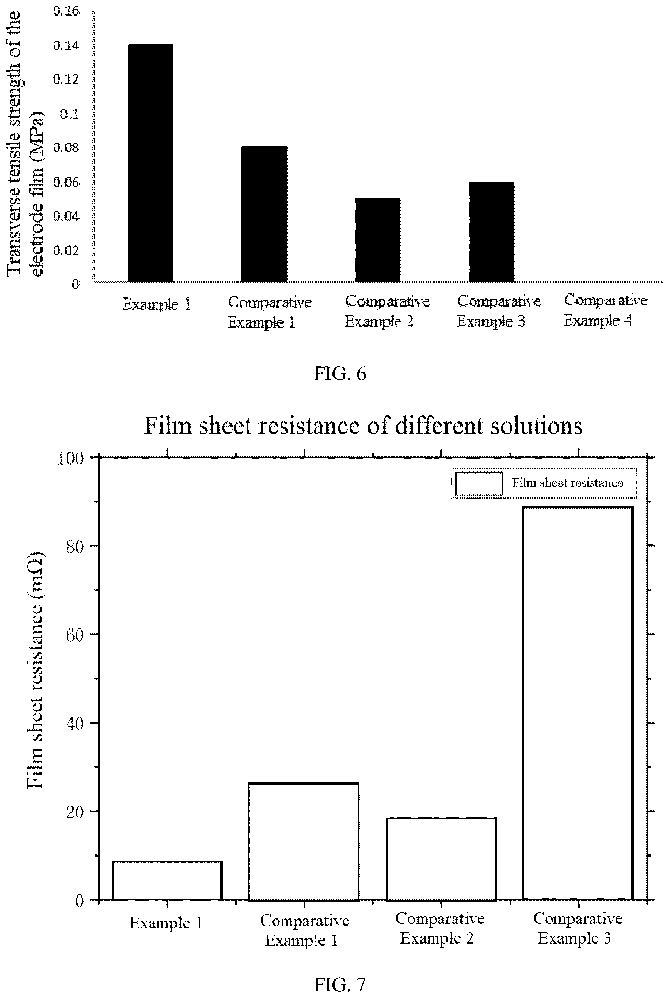

As shown in FIG. 7, the electrical resistivity of the electrode sheet represented by Example 1 is the smallest at 9 mΩ, while the electrical resistivity of the electrode sheet of Comparative Example 3 is the largest, and the electrical resistivity of the electrode sheet of Comparative Examples 2 and 3 is at least 2 times or higher than that of Example 1, indicating that the electrical resistivity of the electrode prepared by Example 1 through subjecting PTFE to low-temperature high-speed milling shear to obtain nanoscale PTFE is only about 30% of the electrical resistivity of the electrode prepared by microscale PTFE.

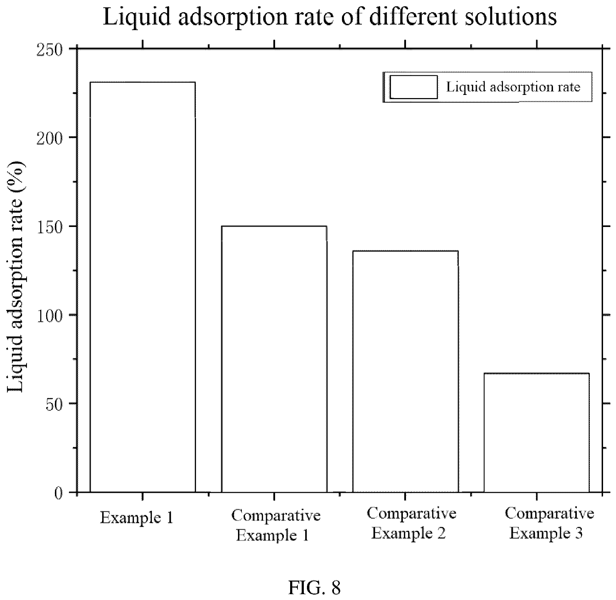

As shown in FIG. 8, the liquid absorption rate of the electrode sheet represented by Example 1 is the largest, reaching 225% or more, the liquid absorption rate of the electrode sheets of Comparative Example 1, Comparative Example 2, and Comparative Example 3 decreases sequentially, and the liquid absorption rate of Comparative Example 1 only reaches about 65% of that of Example 1, indicating that the liquid absorption rate of the electrode prepared by Example 1 through subjecting PTFE to low-temperature high-speed milling shear to obtain nanoscale PTFE is 35% or higher than that of the electrode directly prepared by microscale PTFE.

The above shows that by using the method for preparing a dry electrode film in the present application, the tensile strength and compacted density of the electrode film can be significantly improved, the resistivity of the dry electrode can also be significantly reduced, and the liquid absorption rate is improved.

It should be noted that the terms "first", "second", etc., in the description and claims of the present application are used to distinguish similar objects, and do not need to be used to describe a specific order or sequence. It should be understood that the terms in such use are interchangeable where appropriate, so that the embodiments of the present application described here could, for example, be implemented in a sequence other than those described here.

## Claims

1. A preparation method for a dry electrode film, comprising the following steps:
step S1: mixing a polytetrafluoroethylene material, an electrode active material, and a conductive agent, and pulverizing to obtain a pulverized mixed material;
step S2: subjecting the pulverized mixed material to a primary jet milling shear to obtain a milled-sheared mixed material; wherein conditions of the primary jet milling shear comprise: a gas stream temperature of -10°C to 10°C, a compressed gas stream pressure of 0.7 MPa to 0.9 MPa, and a shear rotational speed of 8000 rpm to 12000 rpm;
step S3: subjecting the milled-sheared mixed material to a secondary jet milling shear and fibrillation to obtain a fibrillized material; and
step S4: subjecting the fibrillized material to a secondary fibrillation treatment to obtain the dry electrode film.

2. The preparation method for a dry electrode film according to claim 1, wherein the gas stream temperature for the primary jet milling shear is -5°C to 5°C; optionally 0°C to 5°C;
and/or, conditions for the secondary jet milling shear comprise: a gas stream temperature of 50°C to 100°C, a compressed gas stream pressure of 0.7 MPa to 0.9 MPa, and a shear rotational speed of 8000 rpm to 12000 rpm;
optionally, the gas stream temperature for the secondary jet milling shear is 60°C to 100°C; optionally 70°C to 100°C; and further optionally 80°C to 100°C; and the shear rotational speed is 10000 rpm to 11000 rpm;
and/or, the shear rotational speed for the primary jet milling shear is 10000 rpm to 11000 rpm; and/or, the polytetrafluoroethylene material is polytetrafluoroethylene dispersion resin, which has an average particle size of 400 µm to 600 µm, a molecular weight of 500,000 to 8,000,000, and a compression ratio of 100 to 3000;
optionally, the polytetrafluoroethylene dispersion resin is heat-preserved at a temperature of -8°C to -12°C for 8 h to 12 h prior to mixing.

3. The preparation method for a dry electrode film according to claim 2, wherein specific process of step S1 comprises: mixing the electrode active material and the conductive agent and pulverizing to obtain a powder material A; and mixing the heat-preserved polytetrafluoroethylene dispersion resin and the powder material A and pulverizing to obtain the pulverized mixed material;
optionally, the electrode active material and the conductive agent are mixed by a ball mill or a high-speed mixer, and a rotational speed of the high-speed mixer is 400 rpm to 600 rpm;
optionally, a ball-to-material ratio of the ball mill is 1:(1-2);
optionally, the polytetrafluoroethylene dispersion resin and the powder material A are mixed by a dual-motion mixer or a three-dimensional motion mixer;
optionally, the polytetrafluoroethylene dispersion resin and the powder material A are mixed in the dual-motion mixer for a period of 20 min to 40 min.

4. The preparation method for a dry electrode film according to any one of claims 1-3, wherein the pulverized mixed material has an average particle size of 8 µm to 12 µm;
and/or, the milled-sheared mixed material has an average particle size of 3 µm to 6 µm;
and/or, the primary jet milling shear and/or the secondary jet milling shear are performed using a jet mill;
optionally, the jet mill is a fluidized bed jet mill.

5. The preparation method for a dry electrode film according to any one of claims 1-4, wherein the secondary fibrillation treatment is performed using a differential speed roller press to carry out differential open mill fibrillation;
optionally, the differential speed roller press has a rolling temperature of 60°C to 120°C, and a rolling speed ratio of 1:(1-1.5).

6. The preparation method for a dry electrode film according to any one of claims 2-5, wherein a weight ratio of the electrode active material to the conductive agent is (90-95):(0-5);
and/or, a weight ratio of the powder material A to the heat-preserved polytetrafluoroethylene dispersion resin is (95-99):(1-5);
and/or, the electrode active material comprises a positive electrode active material and a negative electrode active material; wherein the positive electrode active material is selected from at least one of lithium iron phosphate, lithium manganese iron phosphate, lithium nickel cobalt manganese oxide, lithium cobalt oxide, lithium manganese oxide, lithium nickel cobalt aluminate, and manganese dioxide; and the negative electrode active material is selected from at least one of artificial graphite, natural graphite, lithium titanate, a silicon-oxygen negative electrode material, and silicon carbon;
and/or, the conductive agent is selected from at least one of conductive carbon black, graphite, graphene, carbon nanotubes, carbon fiber, acetylene black, and Ketjen black.

7. A dry electrode film, which is prepared by the preparation method for a dry electrode film according to any one of claims 1-6.

8. The dry electrode film according to claim 7, wherein the dry electrode film has a thickness of 100 µm to 152 µm, a tensile strength of 0.15 MPa to 0.4 MPa, and a compacted density of 2.50 g/cm³ to 3.30 g/cm³.

9. A preparation method for a dry electrode, comprising the following steps: rolling a dry electrode film onto at least one side of a current collector; wherein the dry electrode film is the dry electrode film according to claim 7 or 8.

10. The preparation method for a dry electrode according to claim 9, wherein the rolling is performed at a temperature of 0°C to 100°C;
optionally, the current collector is selected from at least one of a copper foil, a carbon-coated copper foil, an aluminum foil, a nickel foil, a stainless steel mesh, an aluminum mesh, and a nickel mesh.

11. A battery, comprising an electrode, a separator, and an electrolyte; wherein the electrode is the electrode prepared by the preparation method for a dry electrode according to claim 9 or 10.
